# FASCICULE DE BREVET EUROPEEN

(11) **EP 3 027 402 B1**
(45) Date de publication et mention de la délivrance du brevet: **20.09.2017**
(21) Numéro de dépôt: 14759015.2
(22) Date de dépôt: 23.07.2014
(51) Int. Cl.: B29D 30/24

(54) **TAMBOUR MUNI DE SECTEURS RETRACTABLES POUR LA CONFECTION D'UN PNEUMATIQUE**
REIFENAUFBAUTROMMEL MIT EINSCHIEBBAREN SEKTOREN
TIRE BUILDING DRUM PROVIDED WITH RETRACTABLE SECTORS

(30) Priorité: 01.08.2013 FR 1357679
(43) Date de publication de la demande: 08.06.2016
(73) Titulaire: Compagnie Générale des Etablissements Michelin, 63000 Clermont-Ferrand (FR)
(72) Inventeur: DELORME, Jean-Claude, F-63040 Clermont-Ferrand Cedex 9 (FR); LEBLANC, Dominique, F-63040 Clermont-Ferrand Cedex 9 (FR); DRUET, Michel, F-63040 Clermont-Ferrand Cedex 9 (FR)
(74) Mandataire: Noel, Luminita
(86) Numéro de dépôt international: PCT/FR2014/051915
(87) Numéro de publication internationale: WO 2015/015096

(56) Documents cités:
- WO-A1-2013/054051
- US-A- 1 669 532
- US-A- 3 485 700
- US-A- 3 576 693
- US-A- 3 779 835
- US-A- 3 867 231
- US-A- 4 772 351
- US-A1- 2004 216 831

## Description

L'invention concerne les pneumatiques et en particulier la réalisation des ébauches d'enveloppe de pneumatique.

L'assemblage des éléments formant la bande de roulement d'une ébauche d'enveloppe de pneumatique de roue a lieu sur un tambour de confection, également appelé forme sommet. Ces éléments comprennent principalement de la gomme crue. Une fois assemblée, la bande de roulement est ôtée du tambour et déposée sur une carcasse réalisée séparément. L'association des deux forme un bandage. Après mise en forme de ce dernier, on obtient l'ébauche crue que l'on cuit ensuite pour la vulcanisation de la gomme.

La demande WO 2013/054051 au nom des demanderesses divulgue un tambour qui comprend des secteurs primaires et secondaires formant sa face circonférentielle. Ces secteurs sont mobiles en direction radiale à l'axe de rotation du tambour pour permettre d'extraire la bande de roulement une fois celle-ci réalisée et aussi pour adapter le diamètre du tambour en fonction de celui de la bande de roulement à confectionner. Les secteurs primaires sont également mobiles suivant la direction axiale par rapport aux secteurs secondaires. Ainsi, lorsqu'on souhaite augmenter le diamètre du tambour, on éloigne de l'axe tous les secteurs puis on rapproche les secteurs secondaires des secteurs primaires en direction axiale afin de combler les espaces apparus entre les secteurs primaires et restaurer la continuité de la face circonférentielle pour qu'elle serve d'appui aux éléments de la bande de roulement.

Lorsqu'on souhaite extraire du tambour la bande de roulement réalisée, on rapproche de l'axe certain des secteurs de façon à ménager des espaces entre les autres secteurs restés immobiles. Il est alors possible de saisir la bande en introduisant des moyens de préhension dans les espaces ainsi apparus. Ensuite, on déplace tous les secteurs en direction radiale de façon à libérer totalement la bande par rapport au tambour. C'est l'opération de collapsage.

Le mécanisme de commande des secteurs comprend à cette fin une première came apte à déplacer certains secteurs et une deuxième came apte à déplacer les autres. Un actionneur permet de faire tourner l'une des cames par rapport à l'autre et ainsi, au début du processus, de rapprocher les premiers secteurs de l'axe sans déplacer les autres.

Ce tambour est toutefois susceptible d'être amélioré. En effet, la commande des secteurs au cours du processus ci-dessus nécessite d'abord de commander l'actionneur pour faire tourner une came par rapport à l'autre puis de commander un autre actionneur assurant le déplacement simultané des deux cames. La commande du tambour pour la libération de la bande est donc relativement compliquée. Et le mécanisme est lui aussi complexe.

On connaît aussi d'après US-3 867 231 un tambour présentant deux types de secteurs, larges et étroits, montés mobiles en direction radiale, leur déplacement étant permis par la rotation d'une came qui présente deux types de gorges assurant respectivement le déplacement des secteurs étroits et des secteurs larges.

Ce tambour comporte douze secteurs, ce qui peut sembler être un nombre insuffisant d'éléments pour assurer la continuité de la surface. En effet, avec un nombre de secteurs aussi faible, les écarts de géométrie de la surface circonférentielle sur la plage de réglage de diamètre du tambour peuvent être importants et engendrer des défauts concernant l'uniformité de l'enveloppe de pneumatique fabriquée. Pour compenser ce défaut de continuité de la surface, il est nécessaire, soit de réduire l'étendue de la plage de réglage de diamètre, ce qui rend le tambour moins utile, soit d'augmenter le nombre de secteurs. Cependant avec cette dernière solution, la difficulté est de pouvoir commander tous les secteurs, les cames présentant un espace limité pour accueillir des rampes, chaque rampe étant reliée à un secteur donné.

Un but de l'invention est de simplifier le processus et le mécanisme pour la libération de la bande.

Un autre but de l'invention est de proposer un mécanisme permettant de commander un nombre relativement important de secteurs.

À cet effet, on prévoit selon l'invention un tambour de confection d'une ébauche d'enveloppe de pneumatique comme défini dans la revendication 1, qui comporte :
- des secteurs formant une face circonférentielle du tambour, et
- au moins une came de commande d'un déplacement radial des secteurs par rapport à un axe de rotation du tambour,
la came présentant deux faces principales et étant agencée de sorte qu'un mouvement monotone de la came entraîne d'abord le déplacement radial de certains des secteurs grâce à des rampes situées sur sa première face sans modifier une position radiale des autres secteurs, puis entraîne le déplacement radial des autres secteurs grâce à des rampes situées sur sa seconde face, le déplacement de tous les secteurs étant alors simultané..

On rappelle qu'une fonction monotone est une fonction dont le sens de variation ne change pas. Sur un intervalle donné, il s'agit donc d'une fonction croissante ou bien d'une fonction décroissante mais pas des deux à la fois. Par « mouvement monotone », on entend donc que le mouvement de la came ne change pas de sens.

Ainsi, c'est le même organe et le même mouvement de ce dernier, sans changement de sens, qui commande les deux phases du mouvement des secteurs. La commande de la rétractation des secteurs est donc particulièrement simple. De plus, les deux faces de la came permettent de commander à partir d'un unique organe un grand nombre de secteurs.

Avantageusement, les secteurs comprennent des secteurs d'un premier type et des secteurs d'un second type aptes à venir en appui suivant la direction radiale contre les secteurs du premier type, la came étant agencée de sorte que les secteurs du premier type sont déplacés grâce aux rampes situées sur la première face de la came, les secteurs du second type étant déplacés grâce aux rampes situées sur la seconde face de la came.

De préférence, le tambour est agencé de sorte que les secteurs du premier type, après le début de leur déplacement par la came, sont reçus dans des dégagements ménagés dans les secteurs du second type.

On peut ainsi réduire la course de rétractation des secteurs et donc les temps de cycle.

Dans un mode de réalisation, certaines des rampes aptes à commander le déplacement de certains secteurs présentent un tronçon en arc de cercle coaxial à un axe de rotation de la came.

Ce tronçon coaxial n'engendre pas de mouvement radial des secteurs correspondants lorsqu'il est parcouru par un organe suiveur relié aux secteurs.

On peut prévoir que les cames sont au moins au nombre de deux.

Avantageusement, au moins certains des secteurs, et de préférence tous, sont montés mobiles par rapport au support suivant une direction prédéterminée non radiale à l'axe de rotation et interceptant ce dernier.

Ce mode de déplacement des secteurs permet de simplifier leur définition géométrique et de réduire l'énergie à fournir pour leurs déplacements relatifs, tout en obtenant une surface de travail quasi continue.

Dans un mode de réalisation, le tambour comprend au moins un équipage monté coulissant par rapport au support suivant la direction de l'axe de rotation et relié à plusieurs des secteurs.

De préférence, le tambour est agencé de sorte que les secteurs soient contigus en direction circonférentielle.

Avantageusement, chaque secteur présente deux faces latérales principales planes agencées pour venir en regard des faces homologues des secteurs adjacents.

Avantageusement, les secteurs peuvent présenter un traitement de surface externe anti-collant.

Ainsi, la gomme posée à la surface du tambour étant chaude, le traitement de cette surface facilite son extraction par la suite.

Le fait que ces faces sont planes facilite leur définition géométrique et leur fabrication.

On peut prévoir qu'au moins certains des secteurs, et de préférence tous, présentent une face externe ayant un contour de forme générale trapézoïdale.

On prévoit également selon l'invention un procédé de fabrication d'une enveloppe de pneumatique, comme défini dans la revendication 11, dans lequel on assemble une partie au moins d'une bande de roulement d'une ébauche crue de l'enveloppe sur un tambour conforme à l'invention.

Nous allons maintenant décrire un mode de réalisation de l'invention à titre d'exemple non limitatif en référence aux dessins annexés sur lesquels :
- les figures 1 à 3 sont des vues en perspective illustrant trois configurations des secteurs du tambour dans un mode de réalisation de l'invention ;
- la figure 4 est un diagramme montrant un coulissement de chaque secteur ;
- les figures 5 à 7 sont des vues en coupe des secteurs montrant trois configurations du tambour lors de l'opération de collapsage ;
- les figures 8 à 18 sont des vues et des diagrammes illustrant le principe de la construction géométrique des faces latérales des secteurs ;
- les figures 19 et 20 sont des vues respectives en perspective du tambour et des deux types de secteurs;
- la figure 21 est une vue en perspective et en coupe du tambour de la figure 19 ;
- les figures 22 à 25 sont des vues en perspective illustrant la liaison des secteurs au support ;
- les figures 26 et 27 sont des vues en perspective des deux faces d'une des cames ;
- les figures 28 et 29 sont vues en perspective de la partie centrale du tambour avec certaines pièces ôtées ; et
- les figures 30 et 31 sont des vues en coupe de la partie centrale du tambour illustrant respectivement ses configurations de plus petit et de plus grand diamètre.

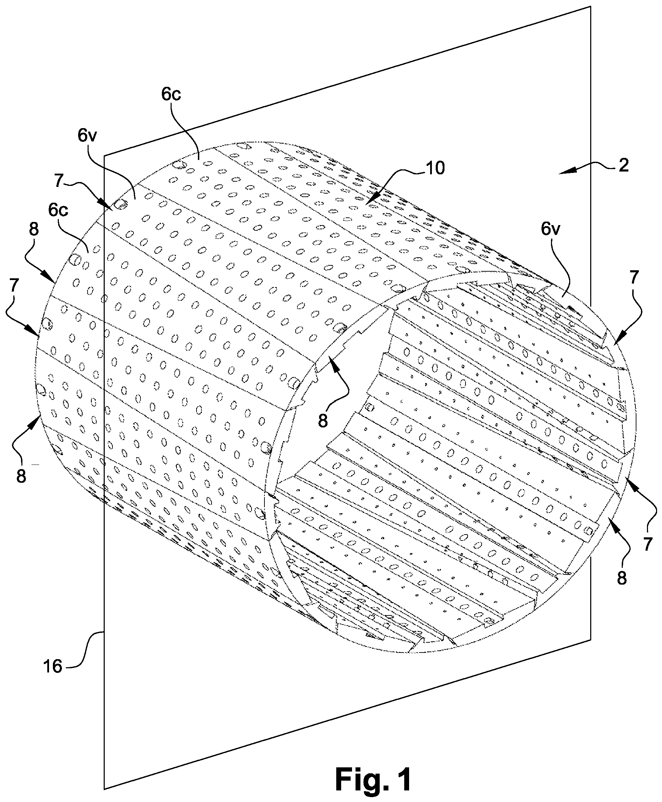

On a illustré à la figure 1 un tambour 2 selon un mode de réalisation de l'invention. Ce tambour sert à l'assemblage des éléments formant une bande de roulement pour une ébauche crue de pneumatique. Le pneumatique est destiné à une roue de véhicule qui pourra être un véhicule utilitaire, un véhicule de type léger, un véhicule de tourisme, un véhicule de type poids lourd ou encore un engin de génie civil.

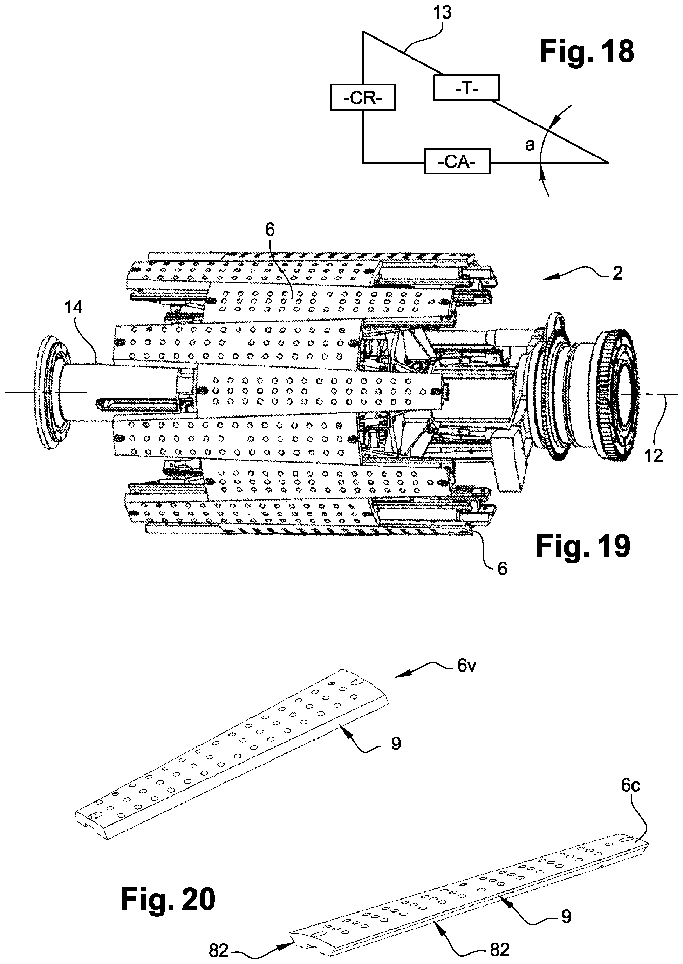

Le tambour comprend un support 14 illustré notamment à la figure 19 et ayant une forme générale à symétrie de révolution d'axe 12 qui forme l'axe de rotation du tambour. Dans toute la suite, et sauf indication contraire, la direction axiale désigne une direction parallèle à l'axe 12 et la direction radiale une direction quelconque radiale à ce dernier, c'est-à-dire qui lui est perpendiculaire et qui intercepte donc cet axe.

S'agissant d'un outillage d'assemblage d'un sommet pour une ébauche, la surface de cet outillage est quasi-continue, à diamètre variable et permet en particulier la construction d'une bande de roulement par empilage successif de bandelettes de gomme crue posées à chaud. A cet effet, elle présente un traitement de surface anti-collant pour permettre la pose de la gomme chaude et faciliter son extraction par la suite. La face circonférentielle du tambour est notamment exempte de relief ou de décrochement en forme de marche d'escalier souvent rencontrés dans les tambours de l'état de la technique. Cela évite la déformation des bandelettes de gomme et les défauts de fabrication tels que les soufflures apparaissant lors de la cuisson.

Le tambour 2 présente des secteurs 6c, 6v, qui s'étendent en périphérie du support 14 pour former la face circonférentielle 10 du tambour qui constitue la face de travail sur laquelle sont disposés les éléments de la bande de roulement. Cette face 10 a, en l'espèce, une forme générale cylindrique à section circulaire dans un plan perpendiculaire à l'axe 12. Le tambour forme donc ici ce que l'homme du métier désigne souvent par une « forme plate ».

Comme on le verra dans la suite, une des caractéristiques de ce tambour est que les secteurs sont montés pour se déplacer suivant une direction linéaire inclinée par rapport à l'axe 12 et interceptant cet axe sans lui être perpendiculaire. Au cours de ce mouvement, chaque secteur suit une trajectoire rectiligne par rapport à l'axe, ce qui permet de simplifier la définition et l'usinage des faces de chaque secteur, notamment leurs faces latérales en contact les unes avec les autres, ainsi que le mécanisme de guidage de ces secteurs. En particulier, comme on le verra, les faces latérales sont planes, ce qui les rend facilement usinables.

Les secteurs 6c, 6v sont ici au nombre de 18 mais ce nombre pourrait varier. Chaque secteur présente un plan de symétrie dans lequel est inscrit l'axe 12. Il présente une face externe cylindrique 10 ayant des contours de forme générale trapézoïdale. Ces contours sont délimités par quatre faces planes, à savoir deux faces d'extrémité 7 et 8, la face 7 étant plus courte que la face 8 en direction circonférentielle, et deux faces latérales 9. Les faces 7 et 8 sont perpendiculaires à l'axe 12.

On distingue en l'espèce deux types de secteurs. Les secteurs 6c du premier type sont appelés « secteurs clés » et les secteurs 6v du second type « secteurs voûtes ». Ces deux types de secteurs forment ainsi deux sous-ensembles respectifs. Tous les secteurs du premier type sont identiques entre eux. Il en est de même pour les secteurs du second type. Suivant la direction circonférentielle à l'axe 12, les secteurs du premier type sont disposés en alternance avec ceux du second type mais sont agencés tête-bêche par rapport à ceux-ci.

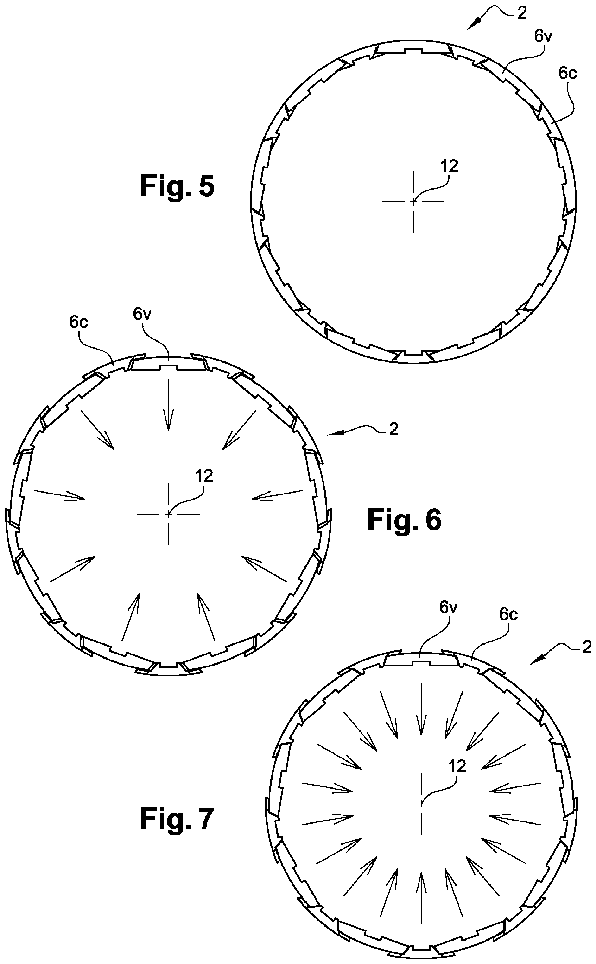

Comme illustré sur les figures 1 et 5, le tambour est agencé de sorte que les secteurs peuvent venir en contact mutuel en direction circonférentielle par leurs faces latérales 9. Chaque secteur vient ainsi en contact avec les deux secteurs adjacents dans la succession. Les secteurs clés et les secteurs voûtes étant régulièrement alternés, chaque secteur clé est contigus à deux secteurs voûtes et réciproquement.

De plus, les faces latérales 9 sont inclinées de sorte que chaque secteur clé est en appui en direction de l'axe sur les deux secteurs voûtes voisins. Lors de la construction de la bande de roulement, une sollicitation radiale exercée sur ce secteur est donc reportée sur les deux secteurs voûtes voisins.

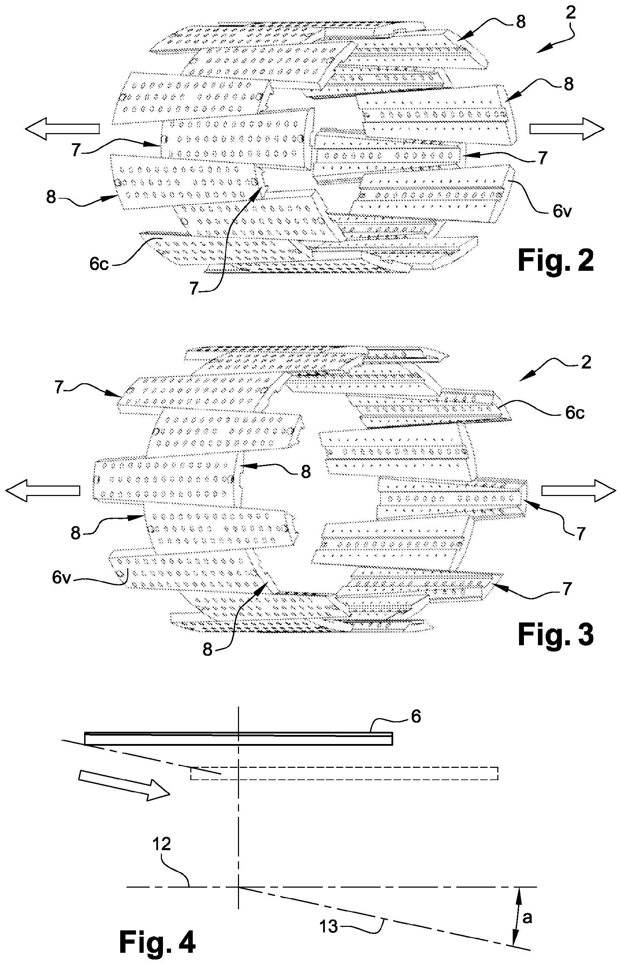

Les secteurs peuvent être déplacés les uns par rapport aux autres pour modifier le diamètre de la face 10. Les configurations de plus petit et de plus grand diamètres du tambour ont été illustrées respectivement aux figures 2 et 3, la figure 1 montrant sa configuration de diamètre moyen.

Sur la figure 2, la distance entre les petites faces d'extrémité 7 des sous-ensembles est plus courte que la distance entre leurs grandes faces d'extrémité 8. C'est ainsi que les secteurs de chaque sous-ensemble dépassent de ceux de l'autre sous-ensemble suivant la direction axiale par leurs grandes extrémités 8. La surface circonférentielle continue offerte pour la réalisation de la bande de roulement se trouve délimitée par les petites faces 7.

Dans la configuration de la figure 3, c'est exactement l'inverse.

Dans la configuration de la figure 1, les petites extrémités 7 des secteurs de l'un quelconque des sous-ensembles s'étendent dans le même plan que les grandes faces extrémités 8 des secteurs de l'autre sous-ensemble. C'est donc cette fois toute la face externe 10 des secteurs qui forme la face de travail du tambour. Dans cette configuration, le tambour est réglé à son diamètre moyen, et la face externe 10 est parfaitement cylindrique.

L'orientation de chaque face latérale 9 est choisie judicieusement afin de:
- permettre les mouvements radiaux nécessaires à l'expansion ou au collapsage de l'outillage ;
- permettre le déplacement des secteurs nécessaire au réglage du diamètre de l'outillage ;
- permettre la conservation du contact entre les faces latérales 9 quel que soit le diamètre choisi afin de préserver autant que possible la continuité de sa face externe ; et
- limiter l'écart d'altitude radiale entre la corde et l'arc d'ellipse sur les arêtes extérieures des secteurs. Comme on le verra dans la suite, ces arêtes sont le résultat de l'intersection entre la face cylindrique extérieure du secteur et les plans de ses faces latérales 9.

Deux mécanismes différents assurent les mouvements de chaque secteur par rapport au support.

Le premier mécanisme permet le réglage du diamètre de l'outillage en assurant la couverture dimensionnelle demandée. En l'espèce, ce diamètre peut être modifié sur une plage de 100 mm.

Lors de ce réglage, en référence à la figure 4, à partir d'une configuration dans laquelle tous les secteurs s'étendant la même distance de l'axe 12, chaque secteur 6c, 6v coulisse par rapport au support suivant une direction prédéterminée 13 non radiale à l'axe 12 et interceptant cet axe. Au cours de ce mouvement, le secteur reste donc parallèle à l'axe 12. L'angle a formé par cette direction et l'axe est ici le même pour tous les secteurs.

De plus, ce mécanisme est agencé de sorte que l'un quelconque des secteurs ne peut pas être déplacé de cette façon par rapport au support sans que les autres secteurs se déplacent eux aussi par rapport au support suivant les directions prédéterminées qui leur sont propres. Plus précisément, lorsque les secteurs de l'un quelconque des sous-ensembles se déplacent suivant la direction 13 par rapport au support, ce déplacement présente une composante le long de l'axe orientée dans un premier sens et les secteurs de l'autre sous-ensemble se déplacent avec une composante le long de l'axe orientée dans un deuxième sens opposé au premier sens. Les secteurs clés se déplacent donc dans un premier sens le long de l'axe et les secteurs voûte dans le sens opposé, leur vitesse absolue étant la même. A un instant quelconque du mouvement, les secteurs restent donc tous à la même distance de l'axe 12.

A un instant quelconque au cours de ce mouvement, les deux sous-ensembles sont l'image l'un de l'autre par une symétrie axiale. L'axe de symétrie est perpendiculaire à l'axe de rotation 12. On a illustré à la figure 1 le plan transversal médian 16 du tambour, perpendiculaire à l'axe 12. A un instant quelconque au cours du mouvement, les petites faces d'extrémité 7 de tous les secteurs s'étendent à la même distance de ce plan. Il en est de même de leurs grandes faces extrémités 8.

La plage de diamètre à couvrir et la largeur de la zone utile sur l'outillage peuvent être modifiées en jouant sur la géométrie des faces latérales 9 combinée à la valeur de l'angle de la direction 13, et sur la longueur des secteurs combinée à leur course par rapport au plan médian.

Par ailleurs, le second mécanisme est réalisé de sorte que chaque secteur est monté mobile par rapport au support suivant une direction radiale à l'axe 12. Les secteurs sont donc mobiles entre deux positions. La première est une position de travail permettant la construction de la bande de roulement, l'outillage ayant le diamètre choisi pour ce travail, comme illustré à la figure 5. La seconde est une position collapsée de l'outillage obtenue à l'issue du mouvement radial des secteurs en direction de l'axe. Cette position permet le décollement des secteurs par rapport à la bande de roulement réalisée et le retrait de l'outillage de l'intérieur de celle-ci. Plus précisément, en l'espèce, ce mécanisme est agencé de sorte qu'il entraîne d'abord le déplacement des secteurs voûtes 6v en direction de l'axe sans modifier la position radiale des secteurs clés 6c comme illustré à la figure 6, puis entraîne le déplacement radial de tous les secteurs simultanément, comme illustré la figure 7. En outre les secteurs clés présentent des dégagements latéraux sous leurs faces latérales 9 leur permettant de recevoir une partie des secteurs voûtes adjacents à l'issue de la première phase du mouvement. On voit donc qu'il est avantageux de prévoir un nombre pair de secteurs. Notamment, comme les secteurs voûtes descendent en premier et sont alternés avec les secteurs clés, ces derniers forment des zones de support pour la bande qui sont régulièrement réparties et préservent son uniformité dimensionnelle en attendant son transfert sur un autre poste et durant ce transfert.

Nous présenterons plus loin le détail de ces deux mécanismes. Nous allons d'abord expliquer la définition géométrique des secteurs.

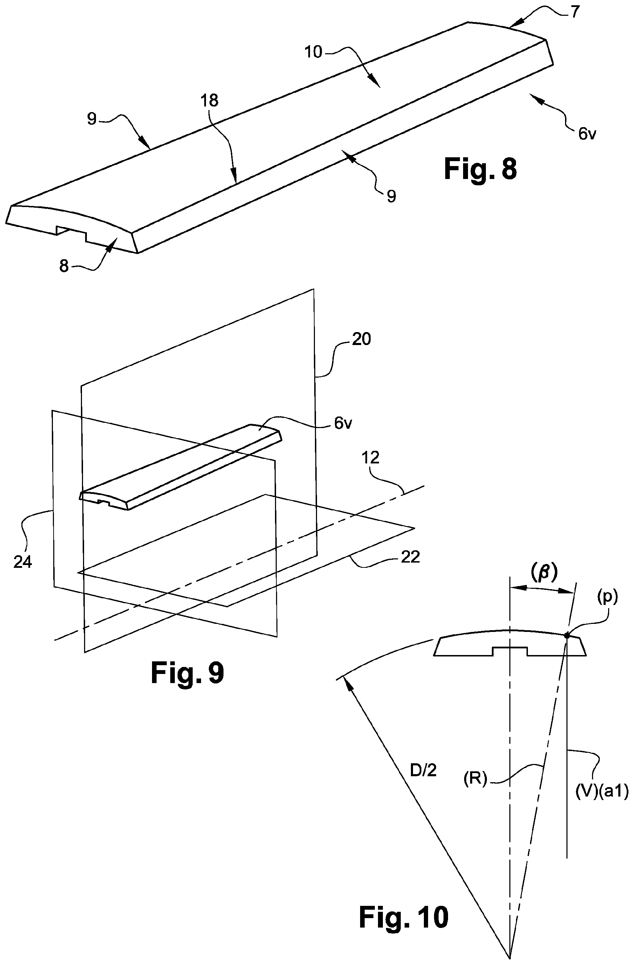

Comme illustré la figure 8, dans la face externe circonférentielle cylindrique 10 de chaque secteur, le diamètre du cylindre est choisi pour correspondre au diamètre moyen de la plage de variation de diamètre à couvrir avec l'outillage, afin de limiter les écarts géométriques entre ce diamètre moyen et les diamètres minimal et maximal de réglage du tambour.

Chaque face latérale 9 est inscrite dans un plan incliné par rapport à l'axe 12, les deux faces 9 d'un même secteur formant un coin. Chaque arête 18 formant l'intersection entre la face 10 et l'une des faces 9 est donc un arc d'ellipse. La figure 8 présente un secteur voûte mais les secteurs clés sont définis de façon analogue. La seule différence réside dans l'orientation des faces latérales 9, qui le sont en direction de l'intérieur du tambour pour les secteurs clés et en direction de l'extérieur pour les secteurs voûtes.

On a illustré à la figure 9 les plans de référence utilisés pour la définition du secteur, à savoir le plan de face 20 passant par l'axe 12 et formant le plan de symétrie du secteur, le plan de droite 24 qui est perpendiculaire à l'axe 12 et le plan de dessus 22 qui est perpendiculaire aux deux précédents.

Il s'agit donc de déterminer l'orientation du plan de la face 9.

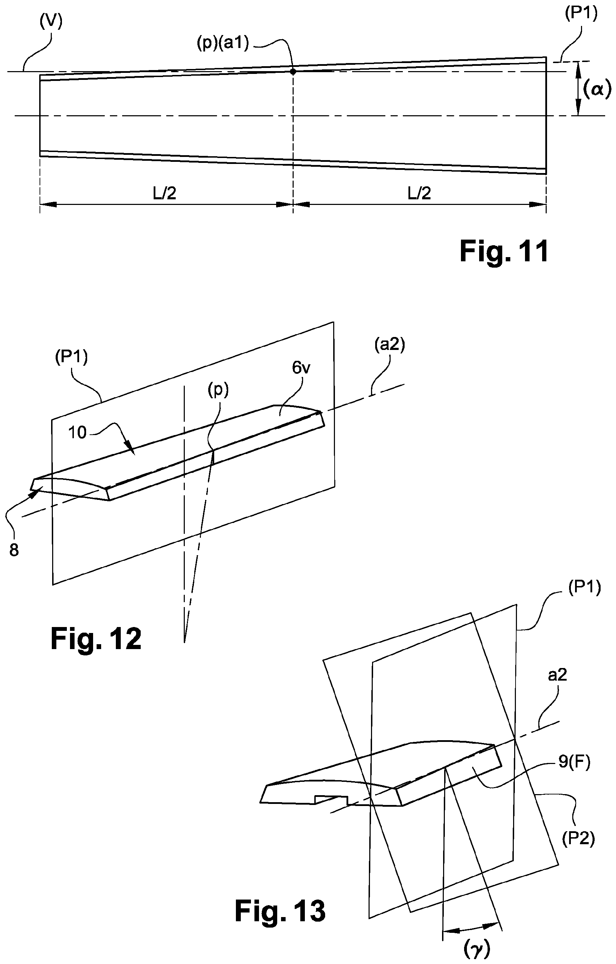

On définit tout d'abord un point *p* d'une génératrice du cylindre de la face 10, ce point passant par un rayon R d'une section du cylindre et étant repéré par rapport au plan de face 20 par un angle β autour de l'axe 12, cet angle étant égal à (360/N)/2 où N est le nombre de secteurs. Ce point est situé au milieu de la longueur de la génératrice sur le secteur comme on le voit sur les figures 11 et 12. En l'espèce, N vaut 18 et β 10°.

En référence aux figures 10 et 11, on définit ensuite un plan V parallèle au plan de face 20 et passant par le point *p*.

On définit aussi un axe a1 perpendiculaire à l'axe 12 , situé dans le plan V et passant par le point *p*.

On définit encore un plan P1 comme l'image du plan V par une rotation autour de l'axe a1 selon un angle *α*, comme illustré à la figure 11.

En référence à la figure 12, on définit dans le plan P1 un axe a2 parallèle au plan de dessus 22 et passant par le point *p*.

En référence à la figure 13, on défini un plan P2 comme l'image du plan P1 par une rotation autour de l'axe a2 selon un angle γ. Le plan P2 est celui de la face latérale 9.

Les deux rotations sont effectuées autour d'angles respectifs inférieurs à 90°. En l'espèce, on choisit γ égal à 20°.

Le plan de la face latérale 9 résulte donc d'une translation du plan radial formant le plan longitudinal de symétrie du secteur, puis d'une rotation autour de l'axe a1 et d'une nouvelle rotation autour de l'axe a2.

On définit donc de cette façon les faces 9 des secteurs clés. Celles des secteurs voûtes sont définies avec la même méthode selon des angles complémentaires de sorte que, lorsque les secteurs clés et voûtes sont assemblés sur le tambour et que ce dernier est en position de travail, les faces 9 des secteurs adjacents sont contiguës les unes aux autres.

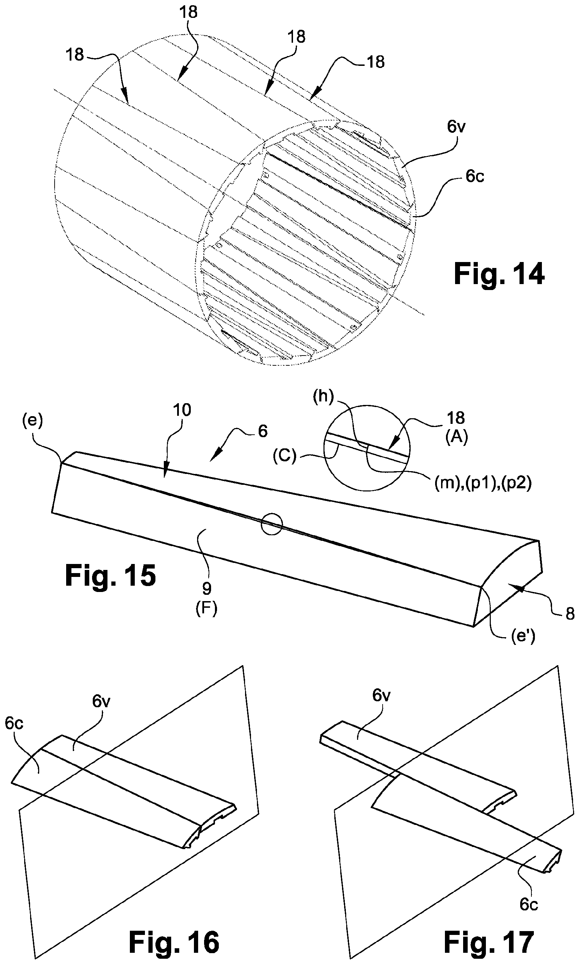

Comme illustré à la figure 14, lorsque les secteurs sont positionnés de sorte que le diamètre extérieur du tambour est identique au diamètre d'usinage de la face 10, c'est-à-dire au diamètre moyen d'utilisation du tambour, tout se passe comme si la face extérieure du tambour était un cylindre découpé en N secteurs dont on aurait usiné les faces latérales 9 définies selon la méthode décrite plus haut à l'aide d'une lame de scie d'épaisseur nulle. Les arêtes 18 des secteurs adjacents sont alors confondues et la continuité de surface du cylindre est théoriquement parfaite. Les tolérances d'usinage des différentes pièces et les jeux nécessaires au fonctionnement de l'outillage introduisent une altération de cette géométrie de l'ordre de quelque centièmes de millimètre.

Si dans cette position de réglage au diamètre moyen les arêtes 18 des secteurs adjacents sont parfaitement confondues, ce n'est plus le cas lorsque l'outillage est réglé à un diamètre différent. En effet, l'arc d'ellipse de l'arête d'un secteur est définie par l'intersection du cylindre de diamètre moyen, fixe, et du plan de la face 9, dont la position est géométriquement fixe par rapport à l'axe du cylindre. Lors du réglage du tambour à un diamètre différent, l'arc d'ellipse fictif résultant de l'intersection du nouveau cylindre du tambour et de la nouvelle position de la face 9 aurait un profil différent de celui de l'arête 18. A cette nouvelle position, les arêtes 18, dont le profil est figé par construction, ne peuvent donc plus être confondues avec la face du cylindre de nouveau diamètre. La continuité de surface d'un secteur à l'autre est donc plus ou moins altérée, selon la valeur de réglage du diamètre extérieur de l'outillage et l'angle α retenu pour la construction des secteurs.

On s'efforce donc de minimiser le décalage entre les arêtes 18 de deux secteurs adjacents en jouant sur l'angle α, qui devra être choisi petit pour les petits diamètres d'outillage, afin d'obtenir une faible courbure de l'arête 18. L'angle α pourra augmenter en fonction du diamètre de la face 10. Typiquement, dans cet exemple, α = 2° pour une plage de variation de diamètre de 100 mm, et des diamètres d'outillage compris entre 500 et 700 mm.

Il s'agit ensuite de déterminer l'angle a de la direction 13 de déplacement des secteurs par rapport à l'axe.

On cherche à maintenir les arêtes 18 de secteurs adjacents les plus proches possible, sans toutefois pouvoir les confondre. Dans la méthode utilisée ici, on choisit pour cela de maintenir confondues les *cordes* C des arêtes 18, en référence à la figure 15.

L'altération de la surface extérieure de l'outillage résulte du décalage d'altitude entre deux arêtes 18 de secteurs adjacents. Le maximum de cette distance peut être évalué comme la hauteur maximale h comprise entre l'arc 18 et sa corde C dans le plan de la face 9. En effet, lors du déplacement de deux secteurs adjacents selon la trajectoire d'angle *a*, à partir du diamètre moyen, tout point p1 pris sur la corde de l'un des secteurs, confondu au départ avec le point p2 pris sur la corde de l'autre secteur, dans le plan de la face de jonction, s'élève radialement et se déplace symétriquement au plan médian de l'outillage de la même valeur radiale que le point p2. On désigne par e et *e'* les extrémités de la corde de l'arête 18. Les cordes C étant maintenues colinéaires lors du déplacement, l'écart d'altitude maximal entre les arêtes 18 des deux secteurs sera donc constaté lorsque le point e ou le point e', selon le sens de déplacement, sera confondu avec le milieu m de la corde C du secteur voisin. L'écart d'altitude maximal, dans le plan de la face 9, sera donc égal à la hauteur *h.*

Typiquement, dans notre construction, cet écart est au maximum de l'ordre de 0.25 mm. L'expérience de la fabrication d'enveloppes sur un outillage similaire montre qu'une limite acceptable est de l'ordre de 0.3 à 0.4 mm entre deux secteurs consécutifs. De telles valeurs sont compatibles avec des efforts classiques de rouletage de bandelette (de l'ordre de 1 daN /mm de largeur de roulette) et des vitesses de pose allant par exemple jusqu'à 400 mètres par minute.

Pour déterminer l'angle *a*, nous cherchons à définir l'élévation radiale d'un secteur lors de son déplacement suivant la direction 13, lorsque les conditions suivantes sont satisfaites:
- les secteurs clés et voûtes se déplacent symétriquement par rapport au plan médian de l'outillage, de la même valeur radiale lors de leur déplacement, et en restant parallèles à l'axe 12 ;
- les faces 9 des secteurs consécutifs sont en contact à toutes les positions de travail, et
- les cordes C de deux secteurs jointifs restent colinéaires.

L'expression de ces conditions peut être matérialisée dans deux positions particulières illustrées respectivement aux figures 16 et 17:
- lors du réglage de l'outillage au diamètre d'usinage des secteur (position initiale), c'est-à-dire à la position de diamètre moyen, et
- dans la position dans laquelle l'extrémité e ou e'd'un secteur est positionnée au milieu de la corde du secteur voisin (position finale), i.e. au diamètre minimal ou maximal du tambour.

Dans ces deux positions, des calculs trigonométriques classiques permettent de définir les coordonnées cartésiennes de points particuliers des secteurs et finalement le rayon de l'outillage dans la seconde position. Il suffit ensuite de résoudre le triangle illustré à la figure 18 dans lequel figurent la course radiale CR et la course axiale CA du secteur lorsqu'il parcourt sa trajectoire inclinée de longueur T. En l'espèce, la course axiale est égale au quart de la longueur du secteur.

L'angle a est donc obtenu par : a = arctg (CR/CA).

Pour un angle α donné, l'écart d'altitude radial entre deux secteurs, lors du réglage aux positions de développement minimal ou maximal, est d'autant plus faible que le diamètre moyen de l'outillage, qui correspond au diamètre D d'usinage des secteurs, est grand. En effet, lors de l'augmentation du diamètre D, la hauteur *h* diminue, car l'arc d'ellipse de l'arête 18 s'aplatit.

On pourra donc utiliser cette propriété lors de la conception d'outillages de plus grand diamètre: pour obtenir un écart d'altitude entre secteurs sensiblement constant quel que soit le diamètre D, on augmentera l'angle α.

Cette méthode a un impact positif sur la masse et l'inertie de l'outillage car:
- en augmentant α, il faut augmenter *a* ;
- pour une élévation constante, la course axiale diminue ;
- la longueur des secteurs nécessaire à une même plage de largeur utile de l'outillage diminue ; et
- les secteurs sont donc plus légers.

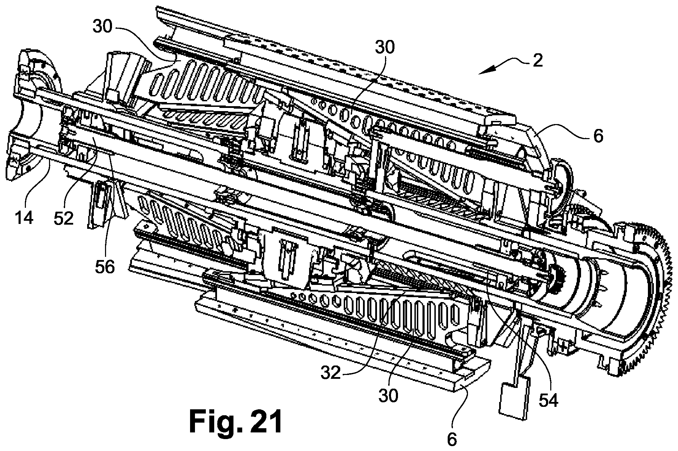

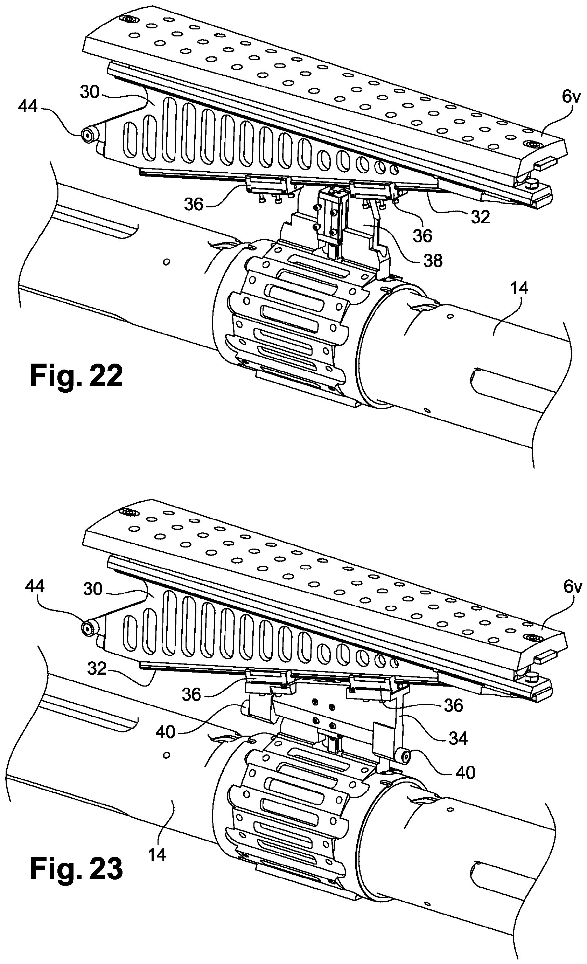

Nous allons maintenant décrire le détail du mécanisme du tambour en référence aux figures 21 à 31.

Le support 14 est formé en l'espèce par un fût d'axe 12 et de forme générale cylindrique. Sauf lorsqu'on met le tambour en rotation lors de la réalisation d'une bande de roulement, ce fût est fixe. Le tambour comprend des équerres 30 associés aux secteurs respectifs. Chaque équerre est rigidement fixée au secteur correspondant et présente une forme générale de triangle rectangle, le plus grand côté de l'équerre contiguë à son angle droit est celui auquel est fixé le secteur. L'hypoténuse de l'équerre forme un rail ou rampe 32. Il présente une forme rectiligne allongée, son orientation par rapport à l'axe 12 correspondant à la direction précitée a de coulissement du secteur. Tout comme les secteurs, les équerres associées aux secteurs clés sont disposées tête-bêche par rapport à celles associées aux secteurs voûtes.

Chaque équerre porte, au voisinage de l'angle droit, une roulette 44 montée libre à rotation par rapport à l'équerre autour d'un axe perpendiculaire au plan général radial de l'équerre. Les roulettes 44 associées aux secteurs clés s'étendent globalement dans un même plan perpendiculaire à l'axe 12. Celles associés aux secteurs voûtes s'étendent également dans un même plan, distinct de l'autre plan.

Le tambour comprend également des porte-secteurs 34 présentant à leur sommet deux patins 36 engagés sur le rail 32 de sorte que l'équerre est montée mobile à coulissement sur le porte-secteur. Les patins présentent un profil femelle complémentaire du profil mâle de la rampe.

Le tambour comprend en outre des platines 38 rigidement fixées au fût 14 et s'étendant en direction radiale depuis ce dernier. Chaque porte-secteur est monté mobile en coulissement radial sur la platine correspondante par des moyens adaptés non détaillés.

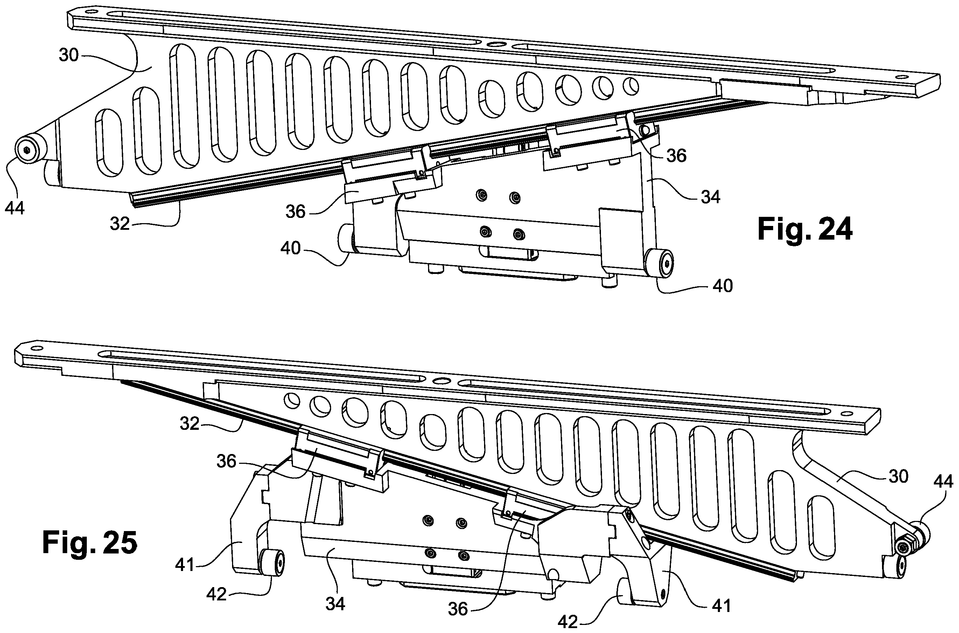

Comme illustré aux figures 24 et 25, chaque porte-secteur présente deux roulettes ou galets 40, 42. Les roulettes 40 associées aux secteurs voûtes sont disposées aux extrémités du porte-secteur tandis que les roulettes 42 associé aux secteurs clés sont portées par des bras 41 du porte secteur et font face au corps de ce dernier. Toutes les roulettes sont montées libres à rotation par rapport au porte-secteur autour d'un axe parallèle à l'axe 12.

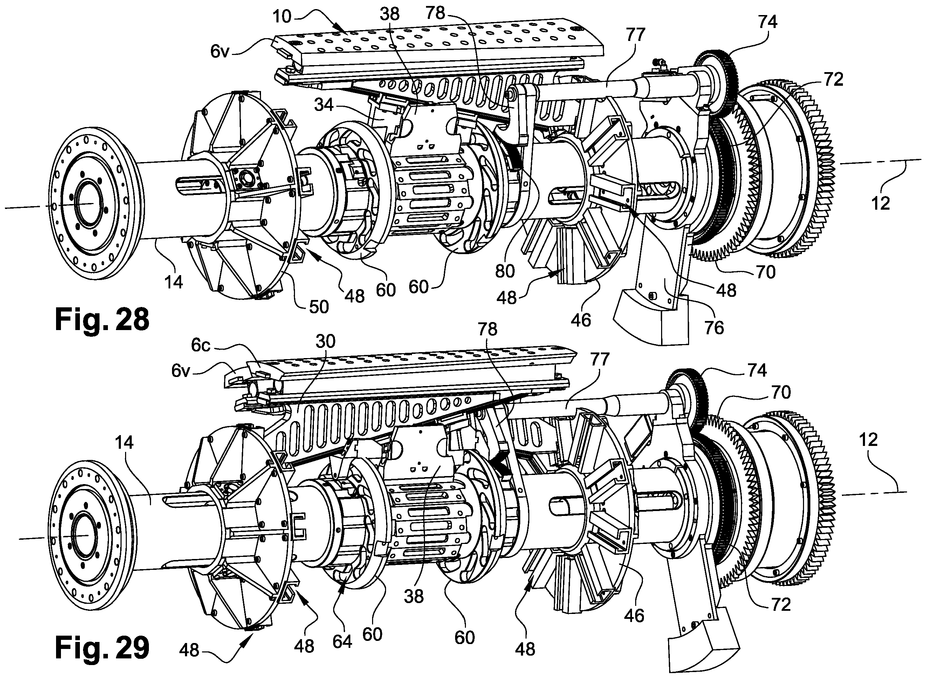

Comme illustré aux figures 28 et 29, le tambour comprend un plateau 46 en forme de disque d'axe 12 monté mobile à coulissement sur le fût 14 suivant la direction axiale. Il présente des logements profilés 48 ouverts du côté des équerres des secteurs voûtes tout le long du logement et à l'extrémité de ce dernier opposée à l'axe. Les logements reçoivent les roulettes 44 correspondantes. Le tambour comprend un plateau analogue 50 associé aux roulettes des secteurs clés.

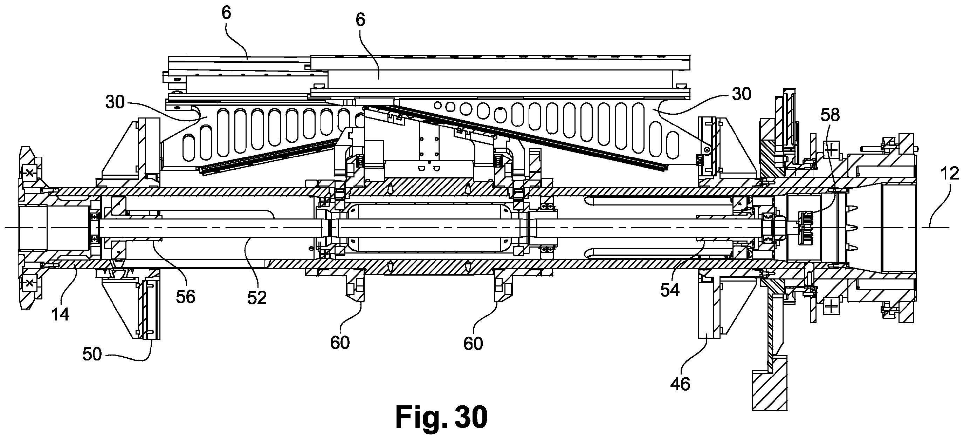

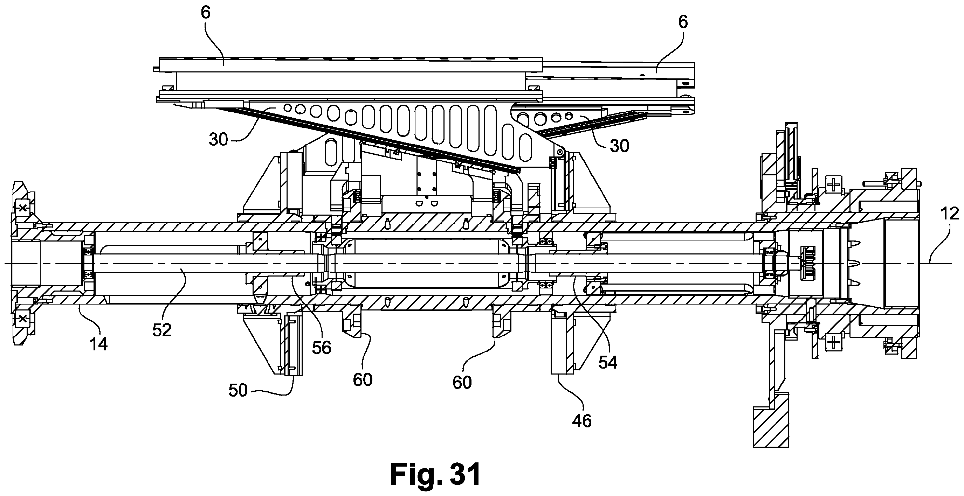

Comme illustré notamment aux figures 30 et 31, le fût 14 renferme une vis 52 présentant deux zones filetées en sens contraire. Deux écrous 54 et 56 sont en prise avec ces zones respectives et reliés rigidement aux plateaux respectifs 46, 50. La vis présente à son extrémité droite sur la figure 30 un crabot 58 servant de moyen d'accouplement avec un organe d'entraînement en rotation de la vis qui n'a pas été illustré.

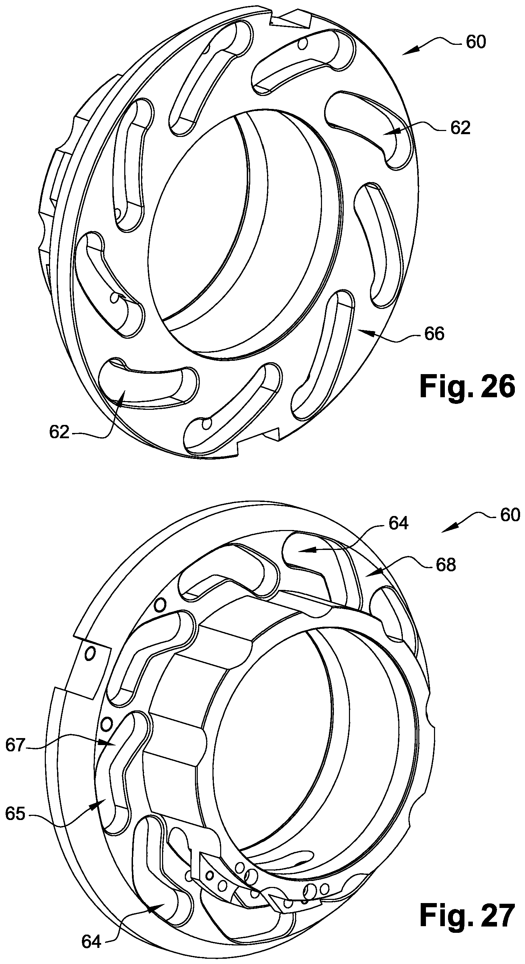

Ainsi, la mise en rotation de la vis 52 à partir du crabot 58 provoque le coulissement de l'écrou 54 et du plateau 46 d'une part et celui en sens contraire de l'écrou 56 et du plateau 50 d'autre part. L'équipage formé par le plateau 46 et l'écrou 54 entraîne dans son coulissement axial les équerres 30 et les secteurs voûtes 6v. Compte tenu de la rampe, cela entraîne le déplacement des équerres et des secteurs suivant la direction inclinée par rapport à l'axe. De la même façon, l'équipage formé par le plateau 50 et l'écrou 56 entraîne les équerres 30 et les secteurs clé 6c et provoque leur déplacement selon la direction inclinée par rapport à l'axe. Ainsi, dans un premier sens de rotation, la vis provoque le rapprochement des secteurs clés et des secteurs voûtes les uns des autres en direction axiale et l'augmentation du diamètre de la face circonférentielle du tambour. Ce déplacement est montré par la succession des figures 30 et 31. Dans l'autre sens de rotation, l'éloignement des plateaux provoque la réduction de ce diamètre. C'est ainsi qu'on effectue le réglage du diamètre de la face de travail du tambour. Le tambour comprend par ailleurs deux cames bifaces 60. Les deux faces de la came située le plus à droite sur la figure 28 sont illustrées aux figures 26 et 27. Les deux cames sont rigidement solidaires l'une de l'autre et montées libres à rotation sur le fût 14 autour de l'axe 12, sans possibilité de coulissement le long de ce dernier. Chaque came bifaces comprend un disque présentant des gorges ou rampes 62, 64 sur ses faces respectives 66, 68. Les deux cames sont symétriques l'une de l'autre par rapport à un plan perpendiculaire à l'axe 12, les faces 66 étant orientées en direction l'une de l'autre. Les gorges 62 de ces faces reçoivent les roulettes 40 respectives associées aux secteurs voûtes. Les gorges 64 des autres faces 68 reçoivent celles correspondant aux secteurs clés 6v. Sur la came des figures 26 et 27, les gorges 62 sont identiques entre elles. Il en est de même pour les gorges 64. Chaque gorge 62 présente un très court tronçon en arc de cercle d'axe 12 contiguë au bord du disque et un tronçon principal en arc de cercle, le tronçon allant en se rapprochant de l'axe. Chaque gorge 64 comprend deux tronçons 65, 67 sensiblement de même longueur, tous deux en arc de cercle. Le premier 65 est situé au bord du disque et est centré sur l'axe 12 tandis que le second se rapproche de l'axe 12.

Le fût porte une roue 70 et un pignon 72 rigidement solidaires l'un de l'autre et tout deux montés mobiles à rotation par rapport au fût autour de l'axe 12. Le tambour comporte également un pignon 74 monté mobile à rotation autour d'un axe parallèle à l'axe 12 mais distinct de ce dernier et porté par un bras 76 lui-même porté par le fût 14. Un arbre 77 est rigidement solidaire du pignon 74 et d'un secteur denté 78 en prise avec un autre secteur denté 80 rigidement solidaire des cames 60.

Lorsqu'un pignon extérieur au tambour vient en prise avec la roue 70 pour la faire tourner, cela provoque la rotation du pignon 72, de la roue 74 et des deux secteurs dentés avec les cames 60. Compte tenu de la forme des gorges 62, les secteurs voûtes 6v sont entraînés en direction de l'axe par coulissement du porte-secteur sur la platine. Pendant ce temps, les roulettes 42 associées aux secteurs clés parcourent le premier tronçon externe 65 des gorges 64. Compte tenu de la forme de ce tronçon, ces secteurs conservent une position radiale inchangée. Le tambour passe donc de la configuration de la figure 5 à celle de la figure 6.

Au cours de la deuxième phase de la rotation des cames dans le même sens, le rapprochement radial des secteurs voûtes se poursuit et simultanément débute celui des secteur clés car les roulettes correspondantes 42 viennent maintenant en prise avec l'autre tronçon 67 des gorges 64. Les secteurs clés et les secteurs voûtes se déplacent alors simultanément en direction de l'axe. Le tambour arrive donc à la configuration de la figure 7. Cette opération de collapsage des secteurs est possible quel que soit le diamètre de réglage du tambour sauf si ce diamètre est trop petit pour permettre le déplacement radial des secteurs.

On peut également prévoir que chaque rampe des cames est réalisée de manière à ce que, pour une vitesse de rotation constante de la came, la vitesse de déplacement des secteurs soit rendue variable, par exemple progressive ou plus faible en fin de course de collapsage ou d'extension, afin de réduire les à-coups.

Comme illustré notamment à la figure 20, les secteurs-clés présentent sous chacune de leurs faces latérales 9 un dégagement ou redan 82 qui leur permet de recevoir une partie des secteurs voûtes après le début du mouvement radial de ces derniers. La poursuite du mouvement des deux types de secteurs peut donc s'effectuer avec les secteurs voûtes partiellement logés dans les dégagements. Ce dégagement permet d'éviter de déplacer les secteurs voûte sur une course radiale trop longue dans la première phase et donc permet de réduire les temps de cycle.

Dans la position de la figure 7, il est facile d'extraire la bande de roulement du tambour au moyen d'un outillage adapté. Une fois cette extraction achevée, on actionne le mécanisme en sens inverse pour replacer les secteurs dans leur position d'origine.

Les deux mécanismes, permettant respectivement le réglage du diamètre et le collapsage, sont totalement indépendants. On peut donc avantageusement, lors d'un changement de dimension comportant un réglage à un nouveau diamètre, commencer par collapser la forme, afin que les secteurs ne soient plus au contact les uns des autres, pour pouvoir les déplacer librement et ne pas user prématurément les faces 9.

Comme on l'a vu précédemment, le tambour 2 comporte dix-huit secteurs (6c, 6v). Ce nombre de secteurs a été choisi pour obtenir une "discrétisation" de la surface externe du tambour la plus petite possible, afin d'obtenir la meilleure régularité géométrique possible (cylindricité et continuité de la surface) sur toute la plage de réglage de diamètre, plage qui s'étend en l'espèce sur 100 mm. Ainsi, plus le nombre de secteurs est élevé, plus l'influence des irrégularités de la surface circonférentielle du tambour se trouve réduite vis-à-vis de l'uniformité de l'enveloppe de pneumatique qui est fabriquée dessus. Le mode de réalisation décrit résulte d'un compromis entre le plus grand nombre de secteurs possibles, la complexité pour loger les mécanismes permettant de piloter les différents mouvements des secteurs, et donc le prix. A cet effet, le nombre de dix-huit secteurs peut être considéré comme trop important pour pouvoir loger dix-huit rampes sur la même face d'une came de commande, tout au moins sur une came dont le diamètre est limité par les autres éléments du tambour. C'est pourquoi le tambour 2 comprend deux cames bifaces 60 monoblocs à dix-huit rampes 62, 64, neuf rampes sur chaque face. L'utilisation de cames bifaces permet de limiter la taille et le nombre d'éléments nécessaires pour piloter ce tambour 2 de diamètre utile égal à 500 mm.

Bien entendu, on pourra apporter à l'invention de nombreuses modifications sans sortir du cadre de celle-ci.

Les mécanismes permettant au cours d'un même mouvement d'une came la descente des secteurs voûtes en premier puis celle simultanée des secteurs clés et des secteurs voûtes est applicable à d'autres types de tambour et par exemple à celui de la demande précitée WO 2013/054051.

## Revendications

1. Tambour (2) de confection d'une ébauche d'enveloppe de pneumatique, qui comporte :
- des secteurs (6v, 6c) formant une face circonférentielle du tambour, et
- au moins une came (60) de commande d'un déplacement radial des secteurs par rapport à un axe (12) de rotation du tambour,
la came présentant deux faces principales (66, 68) et étant agencée de sorte qu'un mouvement monotone de la came entraîne d'abord le déplacement radial de certains (6v) des secteurs grâce à des rampes (62) situées sur sa première face (66) sans modifier une position radiale des autres secteurs (6c), puis entraîne le déplacement radial des autres secteurs (6c) grâce à des rampes (64) situées sur sa seconde face (68), le déplacement de tous les secteurs (6v, 6c) étant alors simultané.

2. Tambour selon la revendication précédente dans lequel les secteurs comprennent des secteurs (6v) d'un premier type et des secteurs (6c) d'un second type aptes à venir en appui suivant la direction radiale contre les secteurs du premier type, la came (60) étant agencée de sorte que les secteurs du premier type (6v) sont déplacés grâce aux rampes (62) situées sur la première face (66) de la came, les secteurs (6c) du second type étant déplacés grâce aux rampes (64) situées sur la seconde face (68) de la came.

3. Tambour selon la revendication précédente agencé de sorte que les secteurs du premier type (6v), après le début de leur déplacement par la came, sont reçus dans des dégagements (82) ménagés dans les secteurs du second type.

4. Tambour selon au moins l'une quelconque des revendications précédentes dans lequel certaines des rampes (64) aptes à commander le déplacement de certains secteurs (6c) présentent un tronçon (65) en arc de cercle coaxial à un axe de rotation de la came.

5. Tambour selon au moins l'une quelconque des revendications précédentes dans lequel les cames (60) sont au moins au nombre de deux.

6. Tambour selon au moins l'une quelconque des revendications précédentes dans lequel au moins certains des secteurs, et de préférence tous (6v, 6c), sont montés mobiles par rapport au support suivant une direction prédéterminée (13) non radiale à l'axe de rotation (12) et interceptant ce dernier.

7. Tambour selon au moins l'une quelconque des revendications précédentes qui comprend au moins un équipage (46, 54, 50, 56) monté coulissant par rapport au support suivant la direction de l'axe de rotation et relié à plusieurs des secteurs.

8. Tambour selon au moins l'une quelconque des revendications précédentes agencé de sorte que les secteurs (6v, 6c) soient contigus en direction circonférentielle.

9. Tambour selon au moins l'une quelconque des revendications précédentes dans lequel chaque secteur présente deux faces latérales principales planes (9) agencées pour venir en regard des faces homologues des secteurs adjacents.

10. Tambour selon au moins l'une quelconque des revendications précédentes dans lequel au moins certains des secteurs, et de préférence tous (6v, 6c), présentent une face externe (10) ayant un contour de forme générale trapézoïdale.

11. Procédé de fabrication d'une enveloppe de pneumatique, **caractérisé en ce qu'**on assemble une partie au moins d'une bande de roulement d'une ébauche crue de l'enveloppe sur un tambour (2) conforme à au moins l'une quelconque des revendications précédentes.

## Patentansprüche

1. Trommel (2) zum Aufbau eines Luftreifen-Mantelrohlings, die aufweist:
- Sektoren (6v, 6c), die eine Umfangsseite der Trommel bilden, und
- mindestens eine Nockenscheibe (60) zur Steuerung einer radialen Verschiebung der Sektoren bezüglich einer Drehachse (12) der Trommel,
wobei die Nockenscheibe zwei Hauptseiten (66, 68) aufweist und so eingerichtet ist, dass eine monotone Bewegung der Nockenscheibe zunächst die radiale Verschiebung bestimmter (6v) der Sektoren aufgrund von auf ihrer ersten Seite (66) befindlichen Rampen (62) ohne Veränderung einer radialen Stellung der anderen Sektoren (6c) bewirkt, dann die radiale Verschiebung der anderen Sektoren (6c) aufgrund von auf ihrer zweiten Seite (68) befindlichen Rampen (64) bewirkt, wobei die Verschiebung aller Sektoren (6v, 6c) dann gleichzeitig ist.

2. Trommel nach dem vorhergehenden Anspruch, wobei die Sektoren Sektoren (6v) eines ersten Typs und Sektoren (6c) eines zweiten Typs enthalten, die in radialer Richtung gegen die Sektoren des ersten Typs in Anlage kommen können, wobei die Nockenscheibe (60) so eingerichtet ist, dass die Sektoren des ersten Typs (6v) aufgrund der auf der ersten Seite (66) der Nockenscheibe befindlichen Rampen (62) verschoben werden, während die Sektoren (6c) des zweiten Typs aufgrund der auf der zweiten Seite (68) der Nockenscheibe befindlichen Rampen (64) verschoben werden.

3. Trommel nach dem vorhergehenden Anspruch, die so eingerichtet ist, dass die Sektoren des ersten Typs (6v) nach dem Beginn ihrer Verschiebung durch die Nockenscheibe in Aussparungen (82) empfangen werden, die in den Sektoren des zweiten Typs vorgesehen sind.

4. Trommel nach mindestens einem der vorhergehenden Ansprüche, wobei bestimmte der Rampen (64), die die Verschiebung bestimmter Sektoren (6c) steuern können, einen kreisbogenförmigen Abschnitt (65) koaxial zu einer Drehachse der Nockenscheibe aufweisen.

5. Trommel nach mindestens einem der vorhergehenden Ansprüche, wobei es mindestens zwei Nockenscheiben (60) gibt.

6. Trommel nach mindestens einem der vorhergehenden Ansprüche, wobei mindestens bestimmte der Sektoren, und vorzugsweise alle (6v, 6c), bezüglich des Trägers in einer vorbestimmten Richtung (13) nicht radial zur Drehachse (12) beweglich montiert sind und letztere schneiden.

7. Trommel nach mindestens einem der vorhergehenden Ansprüche, die mindestens eine Einheit (46, 54, 50, 56) enthält, die gleitend bezüglich des Trägers in Richtung der Drehachse montiert und mit mehreren der Sektoren verbunden ist.

8. Trommel nach mindestens einem der vorhergehenden Ansprüche, die so eingerichtet ist, dass die Sektoren (6v, 6c) in Umfangsrichtung aneinander grenzen.

9. Trommel nach mindestens einem der vorhergehenden Ansprüche, wobei jeder Sektor zwei ebene seitliche Hauptseiten (9) aufweist, die eingerichtet sind, um gegenüber den entsprechenden Seiten der benachbarten Sektoren zu liegen zu kommen.

10. Trommel nach mindestens einem der vorhergehenden Ansprüche, wobei mindestens bestimmte der Sektoren, und vorzugsweise alle (6v, 6c), eine Außenseite (10) aufweisen, die einen allgemein trapezförmigen Umriss hat.

11. Verfahren zur Herstellung eines Luftreifenmantels, **dadurch gekennzeichnet, dass** mindestens ein Teil eines Laufstreifens eines Rohlings des Mantels auf einer Trommel (2) nach mindestens einem der vorhergehenden Ansprüche montiert wird.

## Claims

1. Drum (2) for building a green tyre casing, which has:
- sectors (6v, 6c) that form a circumferential face of the drum, and
- at least one cam (60) for controlling a radial movement of the sectors with respect to a rotation axis (12) of the drum,
the cam having at least two main faces (66, 68) and being designed such that a monotonous movement of the cam first of all causes the radial movement of some (6v) of the sectors by virtue of ramps (62) situated on its first face (66) without modifying a radial position of the other sectors (6c), and then causes the radial movement of the other sectors (6c) by virtue of ramps (64) situated on its second face (68), the movement of all of the sectors (6v, 6c) then being simultaneous.

2. Drum according to the preceding claim, in which the sectors comprise sectors (6v) of a first type and sectors (6c) of a second type that are able to bear in the radial direction against the sectors of the first type, the cam (60) being designed such that the sectors of the first type (6v) are moved by virtue of the ramps (62) situated on the first face (66) of the cam, the sectors (6c) of the second type being moved by virtue of the ramps (64) situated on the second face (68) of the cam.

3. Drum according to the preceding claim which is designed such that, after they have started to be moved by the cam, the sectors of the first type (6v) are received in depressions (82) formed in the sectors of the second type.

4. Drum according to at least any one of the preceding claims, in which some of the ramps (64) that are able to control the movement of some sectors (6c) have a portion (65) in the form of an arc of a circle that is coaxial with a rotation axis of the cam.

5. Drum according to at least any one of the preceding claims, in which there are at least two of the cams (60).

6. Drum according to at least any one of the preceding claims, in which at least some of the sectors, and preferably all of the sectors (6v, 6c), are mounted in a movable manner with respect to the support in a predetermined direction (13) that is not radial with respect to the rotation axis (12) and intersects the latter.

7. Drum according to at least any one of the preceding claims, which comprises at least one set of equipment (46, 54, 50, 56) that is mounted in a sliding manner with respect to the support in the direction of the rotation axis and is connected to a plurality of the sectors.

8. Drum according to at least any one of the preceding claims, which is designed such that the sectors (6v, 6c) are contiguous in the circumferential direction.

9. Drum according to at least any one of the preceding claims, in which each sector has two flat main side faces (9) that are designed to be located next to homologous faces of the adjacent sectors.

10. Drum according to at least any one of the preceding claims, in which at least some of the sectors, and preferably all of the sectors (6v, 6c), have an outer face (10) that has a contour with a trapezoidal overall shape.

11. Method for manufacturing a tyre casing, **characterized in that** at least a part of a tread of a green form of the casing is assembled on a drum (2) in accordance with at least any one of the preceding claims.
